# EUROPÄISCHE PATENTSCHRIFT

(11) **EP 2 747 923 B1**
(45) Veröffentlichungstag und Bekanntmachung des Hinweises auf die Patenterteilung: **30.10.2019**
(21) Anmeldenummer: 12728581.5
(22) Anmeldetag: 20.06.2012
(51) Int. Cl.: B23B 51/04, B28D 1/04

(54) **BOHRKRONE, INSBESONDERE STAHLBETONBOHRKRONE**
HOLE SAW, IN PARTICULAR HOLE SAW FOR REINFORCED CONCRETE
SCIE-CLOCHE, EN PARTICULIER SCIE-CLOCHE POUR BÉTON ARMÉ

(30) Priorität: 23.08.2011 DE 102011081443
(43) Veröffentlichungstag der Anmeldung: 02.07.2014
(73) Patentinhaber: Robert Bosch GmbH, 70442 Stuttgart (DE)
(72) Erfinder: DUSCHA, Helmut, 88212 Ravensburg (DE); SCHLACHTER, Andreas, 88085 Langenargen (DE); WIDMANN, Rainer, 88285 Bodnegg (DE); FLUHR, Harry, 88273 Blitzenreute (DE)
(86) Internationale Anmeldenummer: PCT/EP2012/061855
(87) Internationale Veröffentlichungsnummer: WO 2013/026594

(56) Entgegenhaltungen:
- DE-U1- 20 201 300
- FR-A- 1 002 187
- SU-A1- 1 754 346
- US-A- 4 056 152

## Beschreibung

Die Erfindung betrifft eine Bohrkrone, insbesondere eine Stahlbetonbohrkrone für drehendes oder drehschlagendes Bohren von Stahlbeton oder anderen armierten Materialien nach dem Oberbegriff des Anspruchs 1.

### Stand der Technik

Aus der DE 197 40 277 A1 ist eine Bohrkrone zum Bohren von Gestein bekannt, welche einen Einspannschaft, eine Bohrhülse mit einem Bohrhülsenboden und einem Bohrhülsenmantel und wenigstens mehrere Zähne umfasst, wobei die Zähne an einer freien, kreisringförmigen Stirnseite des Bohrhülsenmantels angeordnet sind und wobei jeder Zahn in Vorschubrichtung über die Stirnseite des Bohrhülsenmantels vorsteht.

Aus der FR 1 002 187 A ist eine Bohrkrone nach dem Oberbegriff des Anspruchs 1 bekannt.

### Offenbarung der Erfindung

Es ist Aufgabe der Erfindung eine Bohrkrone vorzuschlagen, welche besonders zum drehenden oder drehschlagenden Bohren von armierten Materialien und insbesondere von Stahlbeton geeignet ist und mit welcher auch in Bereichen mit Armierung ein ungehinderter und schneller Bohrfortschritt möglich ist.

Diese Aufgabe wird durch die Merkmale des Anspruchs 1 gelöst. In den Unteransprüchen sind vorteilhafte und zweckmäßige Weiterbildungen angegeben. Die erfindungsgemäße Bohrkrone weist an der Stirnseite ihres Bohrhülsenmantels vor jedem Zahn in Drehrichtung einen Abweiser auf. Hierdurch wird der Zahn insbesondere an seiner entgegen der Drehrichtung ausgerichteten Frontfläche und an seiner Schneidkante vor einer starken Kollision mit einer Armierungsstrebe des Stahlbetons oder des anderen armierten Materials geschützt. Zum einen wird hierdurch eine ungewünscht starke Belastung des Zahns und somit ein ungewünschter Verschleiß vermieden und zum anderen wird hierdurch ein Einhaken der Bohrkrone in einer Armierungsstrebe verhindert. Ein derartiges Einhaken führt ebenfalls zu hohen Belastungen und zu starkem Verschleiß, verzögert durch ein Abbremsen der Bohrkrone zusätzlich auch noch den Bohrfortschritt und bringt für eine die Schlagbohrmaschine mit der Bohrkrone haltende Person auch noch eine Verletzungsgefahr durch einen ruckartigen Bohrbetrieb mit hohen und überraschend auftretenden Drehmomentspitzen mit sich. Kern der Erfindung ist somit die zusätzliche Ausstattung der Bohrkrone mit den einzelnen Zähnen zugeordneten Abweisern, welche sowohl im drehenden Betrieb der Bohrkrone ein zu tiefes Eingreifen eines der Zähne in eine Armierungsstrebe verhindern als auch im drehschlagenden Betrieb verhindern, dass einer der Zähne bei einem Schlagimpuls vor einer Armierungsstrebe zu tief eindringt und bei der Drehbewegung an der Armierungsstrebe hängen bleibt. Diese Abweiser bilden im Betrieb der Bohrkrone vor jedem Zahn eine Rampe, welche den Zahn sowohl dann schützt, wenn dieser sich in der Drehrichtung w auf Kollisionskurs mit einer Armierungsstrebe befindet als auch dann schützt, wenn sich dieser in axialer Richtung x auf Kollisionskurs mit einer Armierungsstrebe befindet. In beiden Fällen wird durch den Abweiser verhindert, dass der Zahn vor der Armierungsstrebe zu tief in das zu bearbeitende Material eintaucht und dann an der Armierungsstrebe hängen bleibt. Somit ist die erfindungsgemäße Bohrkrone sowohl zum Anbohren im drehenden Betrieb, als auch zum Weiterbohren im drehschlagenden Betrieb geeignet. Zusätzlich ist die erfindungsgemäße Bohrkrone auch geeignet im rein schlagenden Betrieb betrieben zu werden, um beispielsweise gelockert zu werden, da auch bei einem rein schlagendem Betrieb ein Einhaken der Zähne an der Armierung durch die Abweiser verhindert werden kann. Weiterhin hat die erfindungsgemäße Bohrkrone den Vorteil, dass diese beim drehenden oder drehschlagenden Bohren in Abschnitten, in welchen das zu bearbeitende Material keine Armierungsstreben aufweist, durch ihre weit über die Stirnseite hervorstehenden Zähne einen raschen Bohrfortschritt gewährleistet, da dann die Abweiser wie kleine, vorgelagerte Zähne arbeiten und statt einer Schutzfunktion eine Abtragsfunktion übernehmen. Somit passt sich jede aus einem Zahn und einem vorgelagerten Abweiser gebildete Wirkeinheit der Bohrkrone in ihrer Arbeitsweise automatisch den Gegebenheiten in dem zu bearbeitenden Material an, so dass sowohl in armierungsfreien Abschnitten als auch in armierten Abschnitten ein optimaler und störungsfreier Bohrfortschritt erreichbar ist.

Weiterhin sieht die Erfindung bevorzugt vor, den Zahn gegenüber dem Abweiser mit einem in Richtung einer Längsachse der Bohrkrone gemessen Überstand anzuordnen, welcher kleiner ist als ein Überstand, welchen der Zahn gegenüber der Stirnseite der Bohrkrone aufweist. Hierdurch ist der Überstand des Zahns, welchen dieser gegenüber der kreisringförmigen Stirnseite der Bohrkrone aufweist, im Bereich seiner Frontfläche faktisch reduziert, so dass die Gefahr einer Überbelastung des Zahns oder eines Einhakens des Zahns sicher vermieden wird und ein kontinuierlicher Bohrfortschritt erreicht wird.

Die Erfindung sieht auch bevorzugt vor, die Bohrkrone mit einem Zentrierbohrer auszustatten, dessen Längsachse auf einer Längsachse der Bohrkrone liegt. Durch einen Zentrierbohrer ist es mit einfachen Mitteln möglich, die Bohrkrone beim Anbohren des zu bearbeitenden Materials sicher zu führen und ein Abrutschen auch bei unebenen Anbohrflächen zu vermeiden.

Bevorzugt ist es auch vorgesehen, einen ersten Abstand zwischen dem vorgelagerten Abweiser des Zahns kleiner zu bemessen als einen zweiten Abstand zwischen dem Zahn und einem nachgelagerten Abweiser des Zahns, wobei die Abstände auf einer Kreisbahn in einer radial zu der Vorschubrichtung orientierten Ebene gemessen werden. Hierdurch wird sichergestellt, dass ein in unkritischen Bohrsituationen gewünschtes tiefes Eindringen der einzelnen Zähne nicht durch einen dem jeweiligen Zahn zu dicht folgenden Abweiser behindert wird.

Weiterhin sieht die Erfindung bevorzugt vor, einen Abstand, welchen der dem jeweiligen Zahn vorgelagerte jeweilige Abweiser zu dem Zahn, mit welchen dieser eine Wirkeinheit bildet, aufweist, kleiner als einen Durchmesser der in dem zu bohrenden Stahlbeton oder armierten Material angeordneten Armierungsstrebe zu bemessen. Hierdurch kann auch im drehschlagenden Betrieb und auch im schlagenden Betrieb das Einhaken des Zahns an einer Armierungsstrebe wirksam verhindert werden. Weiterhin wird hierdurch auch verhindert, dass sich im drehschlagenden Betrieb oder im schlagenden Betrieb eine Armierungsstrebe zwischen dem Zahn und dem vorgelagerten Abweiser verklemmt.

Bezüglich des Abweisers sieht die Erfindung bevorzugt vor, diesen mit einer Kontaktfläche auszustatten, wobei die Kontaktfläche wenigstens eine Anlauffläche und wenigstens eine Stirnfläche umfasst oder wobei die Kontaktfläche wenigstens eine Anlauffläche umfasst. Durch die Anlauffläche wird die Bohrkrone beim Kontakt mit einer Armierungsstrebe nicht abrupt, sondern sanft entgegen einer axialen Vorschubrichtung zurückbewegt, um eine zu starke Kollision des dem Abweiser folgenden Zahns mit der Armierungsstrebe zu vermeiden. Durch die Stirnfläche ist es möglich, das durch den Abweiser eingestellte Niveau kurzzeitig zu halten.

Bevorzugt ist es vorgesehen, die Anlauffläche des Abweisers in Bezug auf eine radial zu der Vorschubrichtung orientierte Ebene in einer radial orientieren Seitenansicht mit wenigstens einem Abschnitt in einem Winkel von 10° bis 40° zu positionieren und/oder die Anlauffläche in einer radial orientierten Seitenansicht mit wenigstens einem Abschnitt gewölbt auszubilden. Durch eine derartige Formgebung des Abweisers ist es möglich, diesen auf spezielle Erfordernisse wie Art des zu bearbeitenden Materials, Bohrkronendurchmesser, Drehzahl und ähnliches anzupassen.

Gemäß einer bevorzugten Ausführungsvariante sieht die Erfindung einen unterbrechungsfreien Übergang des dem jeweiligen Zahn vorgelagerten Abweisers in den Zahn vor, wobei ein Grundkörper des Zahns und der Abweiser insbesondere materialeinheitlich ausgebildet sind oder wobei der Abweiser insbesondere an dem Zahn anliegt. Hierdurch ist auch bei Materialien mit sehr dünnen Armierungsstreben ein Einhaken des Zahns sicher vermieden.

Weiterhin sieht die Erfindung bevorzugt vor, den Zahn in Draufsicht entgegen einer axialen Vorschubrichtung der Bohrkrone als Trapez auszubilden, wobei eine Vorderkante einer Spanfläche eine Grundseite des Trapezes bildet und wobei eine Hinterkante einer Freifläche des Zahns eine zu dessen Grundseite parallele Seite des Trapezes bildet, wobei eine Schneidkante des Zahns zwei Schenkel des Trapezes verbindet und insbesondere parallel zu der Grundseite ausgerichtet ist. Ein derartiger Zahn vermeidet durch seine stetige Verjüngung entgegen der Drehrichtung ein Verklemmen der Zähne in dem zu bearbeitenden Material.

Die Erfindung sieht auch bevorzugt vor, die Vorderkante des Zahns mit einer Breite auszubilden, welche größer ist als eine Breite des Abweisers, wobei der Zahn radial nach innen und radial nach außen über den Abweiser übersteht. Eine im Vergleich zu dem Zahn schlanke Ausbildung des dem Zahn vorgelagerten Abweisers garantiert einen reibungsarmen Lauf des Abweisers, so dass die erfindungsgemäße Bohrkrone im Vergleich zu einer herkömmlichen Bohrkrone keine erhöhte Reibung aufweist. Gemäß einer Ausführungsvariante der Erfindung ist es vorgesehen, den Abweiser und den Zahn hinsichtlich der Härte gleich auszubilden und diese Bauteile insbesondere auch aus dem gleichen Werkstoff herzustellen. Hierdurch ist insbesondere die Herstellung von einteiligen Wirkeinheiten aus Zahn und Abweiser vereinfacht. Gemäß einer alternativen Ausführungsvariante der Erfindung ist es vorgesehen, den Abweiser mit einer geringeren Härte auszubilden als den dem Abweiser zugeordneten Zahn, wobei die Härte des Abweisers zwischen 20% und 90% und insbesondere zwischen 30% und 70% der Härte des Zahns beträgt. Hierdurch ist es möglich, den Zahn mit einer Härte auszubilden, bei welcher dieser geeignet ist den Impulsspitzen im drehschlagenden Betrieb ohne Bruch standzuhalten und den Abweiser mit einer Härte auszubilden, mit welcher dieser bezüglich seiner Belastung insbesondere im Kontakt mit der Armierung verschleißfest, deformationsfest und insbesondere bruchfest genug ist, um eine ähnlich Standzeit wie der Zahn aufzuweisen. Die gegenüber dem Zahn höhere Bruchfestigkeit des Abweisers wird durch die Reduzierung der Härte des Abweisers erreicht. Insofern zeigt sich die Aufgabenteilung zwischen Zahn und Abweiser bei der alternativen Ausführungsvariante auch in den unterschiedlichen Härten. Der Abweiser, welcher den Zahn vor zu heftigen Kollisionen mit der Armierung schützt, weist gegenüber dem Zahn eine verringerte Härte auf, um Kollisionen mit der Armierung besser und unbeschadeter überstehen zu können als der Zahn. Hierdurch ist es möglich den Zahn im Hinblick auf seine Schneidfunktion zu optimieren bzw. diese länger zu erhalten.

Im Sinne der Erfindung ist unter einem Zahn ein Schneidkörper bzw. ein Schneidelement zu verstehen, welches dazu geeignet ist im drehenden Betrieb schneidend und im drehschlagenden Betrieb schneiden und schlagend bzw. zertrümmernd bzw. meißelnd auf das zu bearbeitenden Material einzuwirken, wobei das Schneidelement auf die Bohrhülse aufgesetzt ist oder in die Bohrhülse eingebettet ist oder materialeinheitlich mit der Bohrhülse ausgebildet ist. Hierbei ist der Zahn einteilig aus einem geeigneten Hartstoff oder mehrteilig mit einem geeigneten Hartstoffeinsatz ausgebildet.

Weitere Einzelheiten der Erfindung werden in der Zeichnung anhand von schematisch dargestellten Ausführungsbeispielen beschrieben.

Hierbei zeigt:
- Figur 1:: eine schematische Seitenansicht einer nicht erfindungsgemäßen Bohrkrone;
- Figur 2:: eine Ansicht der in der Figur 1 gezeigten Bohrkrone aus einer Pfeilrichtung II;
- Figur3:: eine abgewickelte und schematische Darstellung der Zähne und der Abweiser der in den vorhergehenden Figuren gezeigten Bohrkrone;
- Figur 4:: eine Draufsicht auf die Darstellung der Figur 3;
- Figur 5 bis 10:: schematische Darstellungen unterschiedlicher Ausführungsvarianten von Zähnen und Abweisern;
- Figur 11 und 12:: schematische Darstellungen von Zahn und Abweiser zur Erläuterung verschiedener Abmessungen;
- Figur 13:: eine schematische, perspektivische Darstellung eines Abweisers;
- Figur 14.1 - 14.24:: 24 Ausführungsvarianten von Abweisern in schematischer Seitenansicht;
- Figur 15.1 - 15.15:: 15 Ausführungsvarianten von Abweisern in schematischer Ansicht der Abstützfläche und
- Figur 16.1 - 16.16:: 16 Ausführungsvarianten von Abweisern in schematischer Draufsicht von oben.

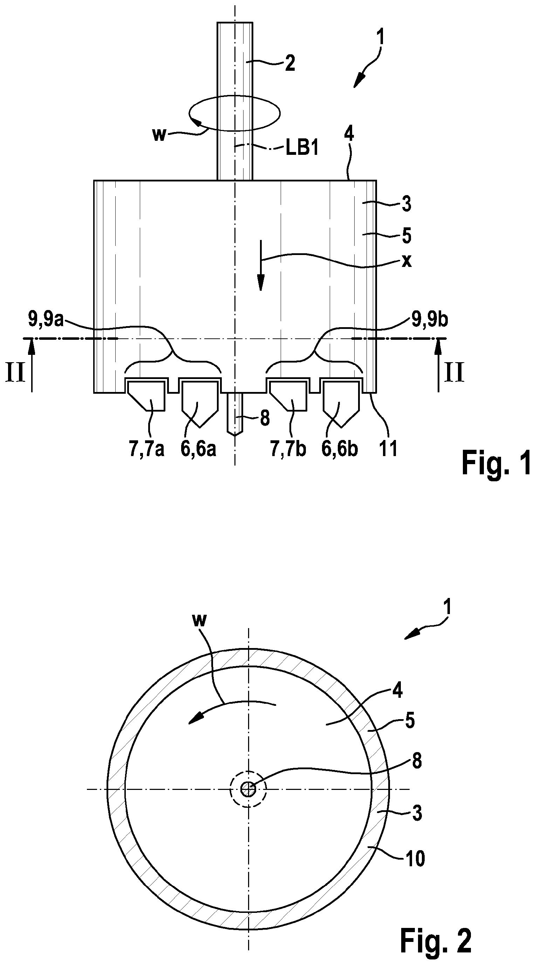

In der Figur 1 ist in schematischer Seitenansicht eine Bohrkrone 1 bzw. Hohlbohrkrone gezeigt. Die Bohrkrone 1 umfasst einen Einspannschaft 2, eine Bohrhülse 3 mit einem Bohrhülsenboden 4 und einem Bohrhülsenmantel 5 sowie Zähen 6 bzw. 6a und 6b und Abweiser 7 bzw. 7a und 7b. der Einspannschaft 2 ist mit dem Bohrhülsenboden 4 der becherförmigen Bohrhülse 3 verbunden. Die Zähne 6 und die Abweiser 7 sind an einer kreisringförmigen Stirnseite 11 der Bohrhülse 3 angeordnet. Die Bohrkrone 1 umfasst weiterhin noch einen Zentrierbohrer 8, welcher in Fortsetzung des Einspannschafts 2 auf einer Längsachse LB1 der Bohrkrone 1 angeordnet und mit dem Bohrhülsenboden 4 verbunden ist. In einem drehenden Betrieb wird die Bohrkrone 1 von einer nicht dargestellten Maschine in die Pfeilrichtung w um ihre Längsachse LB1 gedreht und hierbei auch in eine Pfeilrichtung x gegen ein hier nicht dargestelltes, zu bearbeitendes Material gedrückt. In einem drehschlagenden Betrieb erfolgt nicht nur eine Drehung in die Pfeilrichtung w und ein Vorschub in die Pfeilrichtung x, sondern der Vorschub in die Pfeilrichtung x erfolgt zusätzlich schlagartig bzw. impulsartig, so dass die Zähne 6 schneidend bzw. schälend und meißelnd bzw. zertrümmernd auf das zu bearbeitende Material einwirken. Der Zahn 6a und der dem Zahn 6a in die Drehrichtung w vorgelagerte Abweiser 7a bilden genauso wie der Zahn 6b und der diesem vorgelagerte Abweiser 7b jeweils eine Wirkeinheit 9 bzw. 9a und 9b.

Entsprechend dem in der Figur 1 gezeigten Schnittverlauf II-II zeigt die Figur 2 einen Schnitt durch die Bohrhülse 3. In der Schnittansicht ist erkennbar, dass der Bohrhülsenmantel 5 eine kreisringförmige Wandung 10 bildet, an deren Stirnseite 11 (siehe Figur 1) die Wirkeinheiten 9 angeordnet sind. Wie aus der Figur 1 erkennbar ist stehen sowohl die Zähne 6 als auch die Abweiser 7 in der axialen Vorschubrichtung x über die kreisringförmige Stirnseite 11 hervor.

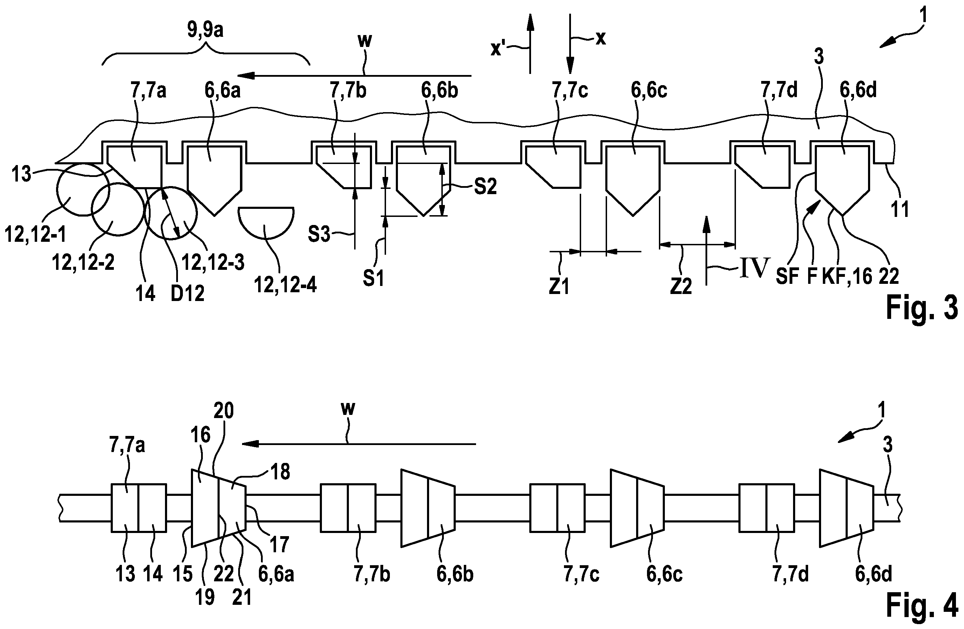

In den Figuren 3 und 4 ist die Bohrkrone 1 im Bereich der Stirnseite 11 ihrer Bohrhülse 3 abgewickelt dargestellt. Das heißt, die kreisringförmig geschlossene Stirnseite 11 ist aufgetrennt und gerade gerichtet dargestellt, wobei in der Figur 3 eine Seitenansicht und in der Figur 4 eine Draufsicht des abgewickelten Abschnitts der Bohrhülse 3 gezeigt ist. Wie aus den Figuren 3 und 4 hervorgeht weist die Bohrkrone 1 vier Wirkeinheiten 9, 9a bis 9d mit vier Zähnen 6, 6a bis 6d und vier Abweisern 7, 7a bis 7d auf. In Richtung der Längsachse LK1 der Bohrkrone 1 bzw. in axiale Wirkrichtung x betrachtet, weist der Zahn 6 gegenüber dem Abweiser 7 einen Überstand S1 auf, weist der Zahn 6 gegenüber der Stirnseite 11 einen Überstand S2 auf und weist der Abweiser 7 weist gegenüber der Stirnseite 11 einen Überstand S3 auf. Weiterhin weisen die Zähne 6 bzw. 6a bis 6d zu ihren zugehörigen und jeweils in Drehrichtung vorgelagerten Abweisern 7 bzw. 7a bis 7d einen Abstand Z1 auf und schließlich weisen die Zähne 6 bzw. 6a bis 6d zu den nachgelagerten Abweisern 7 bzw. 7a bis 7d der jeweils entgegen der Drehrichtung w benachbarten Wirkeinheiten 9, 9a bis 9d einen Abstand Z2 auf. Grundsätzlich gilt, der Abstand Z1 ist kleiner als der Abstand Z2 und der Überstand S2 des Zahns 6 ist größer als der Überstand S3 des Abweisers 7. Somit gilt auch, der Überstand S1 des Zahns 6 gegenüber dem Abweiser 7 ist kleiner als der Überstand S2 des Zahns 6 gegenüber der Stirnseite 11.

In der Figur 3 ist ergänzend noch schematisch eingezeichnet, wie eine Armierungsstrebe 12 zu der Bohrkrone 1 steht, wenn sicht die Bohrkrone 1 in dem nicht dargestellten, zu bohrenden Material um ihre Längsachse LB1 (siehe Figur 1) dreht. Die Bohrkrone 1 dreht sich in die Pfeilrichtung w und läuft dann mit ihrem Abweiser 7a gegen die in der Stellung 12-1 stehende Armierungsstrebe. Wenn der Abweiser 7a dann mit seiner Anlauffläche 13 gegen die Armierungsstrebe 12 läuft, wird die Bohrkrone 1 entgegen ihrer axialen Vorschubrichtung x leicht in eine der Vorschubrichtung x entgegen gesetzte Richtung x' angehoben, was mit einer Zwischenstellung 12-2 der Armierungsstrebe 12 symbolisiert ist. Anschließend gleitet die Bohrkrone 1 dann mit ihrer parallel zu der Stirnseite 11 ausgerichteten Stirnfläche 14 über die Armierungsstrebe 12 (siehe Stellung 12-3). Schließlich wird die Armierungsstrebe 12 durch den mit Hilfe des Abweisers 7 optimal auf die Armierungsstrebe 12 positionierten Zahn 6a der Bohrkrone 1 teilweise zertrümmert bzw. zerschnitten, um dann von einem der nachfolgenden Zähne vollständig getrennt zu werden. Die teilweise Trennung der Armierungsstrebe 12 ist durch die in der Stellung 12-4 gezeigte Armierungsstrebe 12 symbolisiert. Die vorstehende Beschreibung stellt nur eine vereinfachte Darstellung des komplexen Ablaufs des Bohrens mit der erfindungsgemäßen Bohrkrone 1 dar, der insbesondere bei einem rein drehenden oder einen drehschlagenden Betrieb mit geringer Schlagkraft zutrifft. Sofern stärker und insbesondere auch mit größerem Hub und längeren Intervallen geschlagen wird, tritt auch die Situation auf, dass die Anlauffläche 13 gar nicht mit der Armierungsstrebe 12 in Kontakt kommt, sondern vielmehr erst die Stirnfläche 14 des Abweisers 7a verhindert, dass der Zahn 6a zu tief vor der Armierungsstrebe 12 eintaucht und an dieser hängen bliebt. Insofern gilt für die Dimensionierung der Bohrkrone 1 im Verhältnis zu einem Durchmesser D12 der Armierungstreben 12, dass der in axialer Vorschubrichtung x gemessene Abstand S1 zwischen dem Zahn 6 und dem Abweiser 7 kleiner zu bemessen ist als der Durchmesser D12 der Armierungsstrebe 12. Ebenso gilt, dass der Abstand Z1 zwischen dem Abweiser 7 und dem Zahn 6 jedes Wirkpaars 9 kleiner zu bemessen ist als der Durchmesser D12 der Armierungsstrebe 12.

In der Figur 4, welche eine Draufsicht auf die Figur 3 ohne die Armierungsstrebe zeigt, ist eine trapezförmige Form erkennbar, welche die Zähne 6 in der Draufsicht aufweisen. In der Draufsicht bilden eine Vorderkante 15, an welcher entgegen der Drehrichtung w betrachtet eine Spanfläche 16 des Zahns 6a beginnt, eine Hinterkante 17, an welcher entgegen der Drehrichtung w betrachtet eine Freifläche 18 des Zahns 6a endet, und Seitenkanten 19, 20 ein Trapez 21. Eine Schneidkante bzw. Schlagkante 22 des Zahns 6a verbindet hierbei die zwei durch die Seitenkanten 19, 20 gebildeten Schenkel des Trapezes 21. Durch den sich entgegen der Drehrichtung w verjüngenden Zahn 6a wird ein Verklemmen des Zahns 6a in dem zu bearbeitenden Material vermieden.

Durch den Abweiser 7 wird eine Frontfläche F des Zahns 6 geschützt, wobei sich die Fortfläche F des Zahns 6 entgegen der Drehrichtung w betrachtet von der Stirnfläche 11 über eine in Pfeilrichtung x gerichtete Sockelfläche SF und eine an dieser anschließende Kopffläche KF bis zu der Schneidkante 22 erstreckt, wobei die Kopffläche KF durch die Spanfläche 16 gebildet ist. Insbesondere wird durch den Abweiser 7 vermieden, dass der Zahn 6 mit seiner Sockelfläche SF beim Bohren in Anlage an ein der Armierungsstreben 12 kommt und an dieser hängen bleibt.

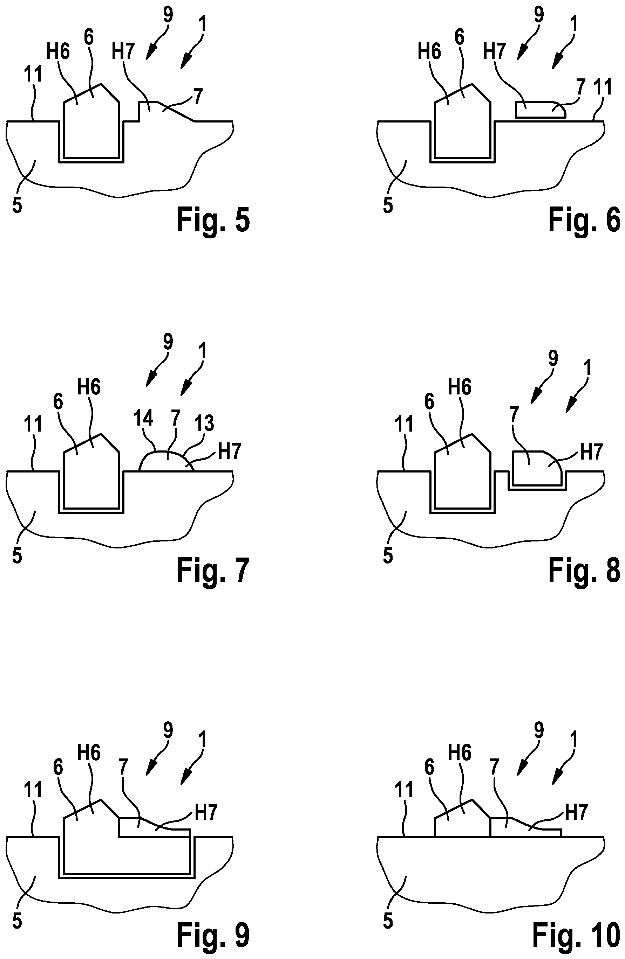

In den Figuren 5 bis 10 sind in Anlehnung an die Darstellung der Figur 3 schematisch verschiedene Ausführungsvarianten für die Ausbildung von Wirkeinheiten 9, welche jeweils einen Zahn 6 und einen Abweiser 7 umfassen, gezeigt.

Bei der in der Figur 5 gezeigten ersten nicht erfinderischen Ausführungsvariante ist der Zahn 6 in einen Bohrhülsenmantel 5 einer Bohrkrone 1 als Hartmetallelement eingebettet, wobei das Hartmetallelement eine Härte H6 von etwa 1400 HV 10 aufweist. Der Abweiser 7 ist materialeinheitlich mit dem Bohrhülsenmantel 5 mit einer Härte H7 ausgebildet bzw. in diesen integriert. Der Abweiser 7 besteht somit aus Stahl. Gemäß einer Ausführungsvariante ist der aus Stahl bestehende Abweiser 7 gehärtet, so dass seine Härte H7 etwa 900 HV10 beträgt.

Bei der in der Figur 6 gezeigten zweiten erfinderischen Ausführungsvariante ist der Zahn 6 in einen Bohrhülsenmantel 5 einer Bohrkrone 1 als Hartmetallelement eingebettet, wobei das Hartmetallelement eine Härte H6 von etwa 1400 HV 10 aufweist. Der Abweiser 7 ist als eigenständiges Bauteil z.B. als Hartmetallaufsatz auf einer Stirnseite 11 des Bohrhülsenmantels 5 befestigt und insbesondere aufgeschweißt oder aufgeschraubt. Gemäß einer ersten Ausführungsvariante weist der Abweiser 7 eine Härte H7 auf, welche der Härte H6 von etwa 1400 HV10 entspricht. Gemäß einer zweiten Ausführungsvariante weist der Abweiser 7 eine Härte H7 auf, welche zwischen 20% und 90% und insbesondere zwischen 30% und 70% der Härte H6 von etwa 1400 HV10 liegt.

Bei der in der Figur 7 gezeigten dritten nicht erfinderischen Ausführungsvariante ist der Zahn 6 in einen Bohrhülsenmantel 5 einer Bohrkrone 1 als Hartmetallelement eingebettet, wobei das Hartmetallelement eine Härte H6 von etwa 1400 HV 10 aufweist. Der Abweiser 7 ist durch Materialauftrag auf einer Stirnseite 11 des Bohrhülsenmantels 5 ausgebildet und insbesondere durch eine nachfolgende schleifende oder zerspanende Bearbeitung insbesondere bezüglich einer Anlauffläche 13 und einer Stirnfläche 14 angepasst. Der Abweiser 7 weist eine Härte H7 auf, welche geringer ist als die Härte H6 des Zahns 6 und zwischen 450 HV10 und 650HV10 liegt, wobei der Abweiser insbesondere in einem Cold-Metal-Transfer-Verfahren aufgebracht ist. Bei einem derartigen Verfahren wird das Material von einem Schweißdraht tropfenförmig durch Hartauftrag-SchutzgasSchweißen aufgebracht, wobei die Härte des erzeugten Abweisers durch die Härte des Schweißdrahts bestimmt ist.

Bei der in der Figur 8 gezeigten vierten nicht erfinderischen Ausführungsvariante ist der Zahn 6 in einen Bohrhülsenmantel 5 einer Bohrkrone 1 als Hartmetallelement eingebettet, wobei das Hartmetallelement eine Härte H6 von etwa 1400 HV 10 aufweist. Der Abweiser 7 ist ebenfalls als Hartmetallelement in den Bohrhülsenmantel 5 der Bohrkrone 1 eingebettet. Gemäß einer ersten Ausführungsvariante weist der Abweiser 7 eine Härte H7 auf, welche der Härte H6 von etwa 1400 HV10 entspricht. Gemäß einer zweiten Ausführungsvariante weist der Abweiser 7 eine Härte H7 auf, welche zwischen 20% und 90% und insbesondere zwischen 30% und 70% der Härte H6 von etwa 1400 HV10 liegt.

Bei der in der Figur 9 gezeigten fünften nicht erfinderischen Ausführungsvariante sind der Zahn 6 und der Abweiser 7 als einteilige Wirkeinheit 9 ausgeführt, welche an einer Stirnseite 11 in einen Bohrhülsenmantel 5 einer Bohrkrone 1 als Hartmetallelement eingebettet ist. Gemäß einer ersten Ausführungsvariante weist das gesamte Hartmetallelement bzw. die Wirkeinheit 9 eine Härte H6 bzw. H7 von etwa 1400 HV 10 auf. Gemäß einer zweiten Ausführungsvariante ist das Hartmetallelement aus gradiertem bzw. dotiertem Hartmetall hergestellt und weist im Bereich des Zahns 6 eine Härte H6 auf, welche größer ist als eine Härte H7, welche das Hartmetallelement im Bereich des Abweisers 7 aufweist.

Bei der in der Figur 10 gezeigten sechsten erfinderischen Ausführungsvariante sind der Zahn 6 und der Abweiser 7 als einteilige Wirkeinheit 9 ausgeführt, welche als Hartmetallaufsatz auf einer Stirnseite 11 eines Bohrhülsenmantels 5 einer Bohrkrone 1 befestigt und insbesondere aufgeschweißt oder aufgeschraubt oder aufgelötet oder aufgeklebt oder klemmend befestigt sind. Gemäß einer ersten Ausführungsvariante weist das gesamte Hartmetallelement bzw. die Wirkeinheit 9 eine Härte H6 bzw. H7 von etwa 1400 HV 10 auf. Gemäß einer zweiten Ausführungsvariante ist das Hartmetallelement aus gradiertem bzw. dotiertem Hartmetall hergestellt und weist im Bereich des Zahns 6 eine Härte H6 auf, welche größer ist als eine Härte H7, welche das Hartmetallelement im Bereich des Abweisers 7 aufweist.

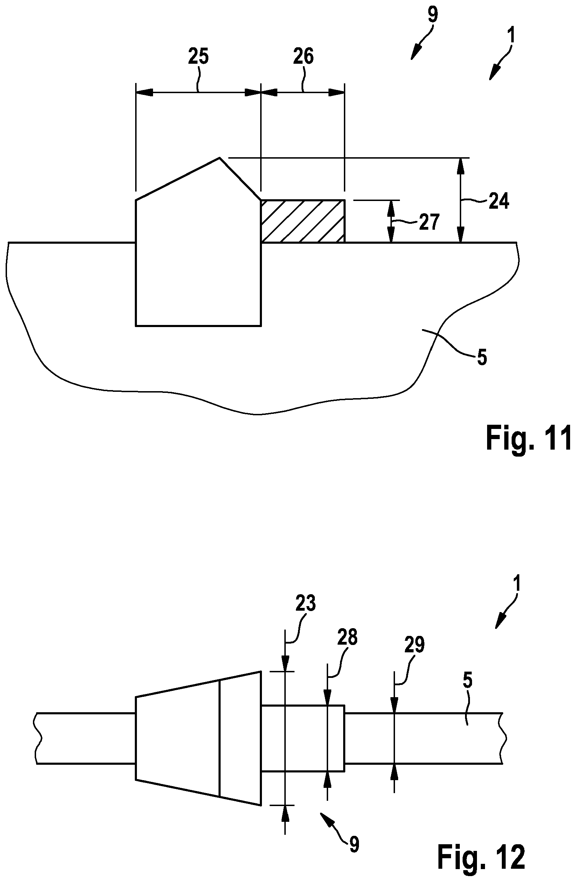

In den Figuren 11 und 12 werden an zwei schematischen Ansichten, welche an die Figuren 3 und 4 angelehnt sind, die grundlegenden Abmessungen einer Wirkeinheit 9 einer Bohrkrone 1, welche aus einem Zahn 6 und einem Abweiser 7 besteht, erläutert. Der Zahn 6 weist eine Zahnbreite 23, gegenüber einer Stirnseite 11 eines

Bohrhülsenmantels 5 einen Zahnüberstand 24 und eine Zahnstärke 25 auf. Hierbei entspricht der Zahnüberstand 24 der in der Figur 3 genannten Abmessung S2. Der Abweiser 7 weist eine Abweiserlänge 26, eine Abweiserhöhe 27 und eine Abweiserbreite 28 auf. Hierbei entspricht die Abweiserhöhe 27 der in der Figur 3 genannten Abmessung S3. Der Bohrhülsenmantel 5 weist eine Wandstärke 29 auf. Die Bohrkrone 1 weist in Bezug auf ihre Wirkeinheiten 9 wenigstens eine der nachfolgend genannten Bedingungen auf:
Die Abweiserlänge 26 entspricht wenigstens der Zahnstärke 25 und beträgt höchstens das 4-fache der Zahnstärke 25.

Die Abweiserhöhe 27 beträgt wenigstens das 0,5-fache des Zahnüberstands 24 und höchstens das 0,9-fache des Zahnüberstands.

Die Abweiserbreite 18 beträgt wenigstens das 0,5-fache der Wandstärke 29 und höchstens das 1-fache der Zahnbreite.

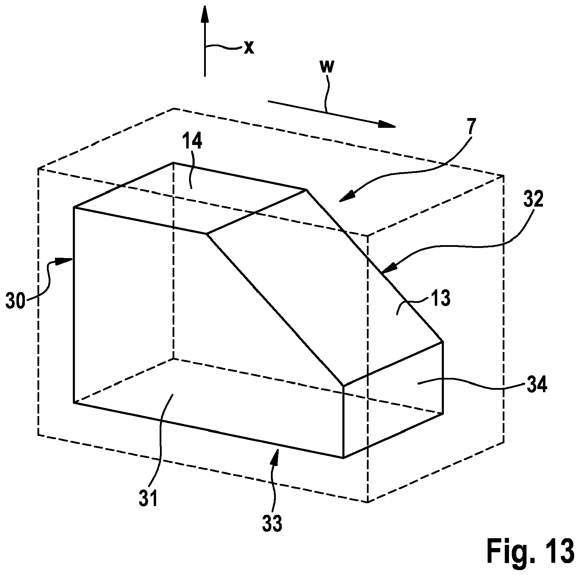

In der Figur 13 ist ein Abweiser 7 in schematischer und perspektivischer Ansicht gezeigt. Zur Orientierung ist eine Drehrichtung w und eine Vorschubrichtung x angegeben, in welche der Abweiser 7 beim Bohren bewegt wird. Der Abweiser 7 weist eine Anlauffläche 13, eine Stirnfläche 14, eine Abstützfläche 30, eine linke Seitenfläche 31, eine rechte Seitenfläche 32, eine Bodenfläche 33 und eine Einbettfläche 34 auf. Mit der Bodenfläche 33 ist der Abweiser 7 auf eine Stirnseite des Bohrhülsenmantels aufgesetzt oder in diese eingebettet wie dies zum Beispiel in den Figuren 5 bis 10 gezeigt ist. Der Abweiser 7 ist in der Regel immer dann in eine Ausnehmung des Bohrhülsenmantels eingebettet, wenn er eine Einbettfläche 34 aufweist. Die Anlauffläche 13 und die Stirnfläche 14 bilden zusammen einen Kontaktfläche 35, mit welcher der Abweiser 7 im Wesentlichen mit einem zu bearbeitenden Material in Kontakt kommt.

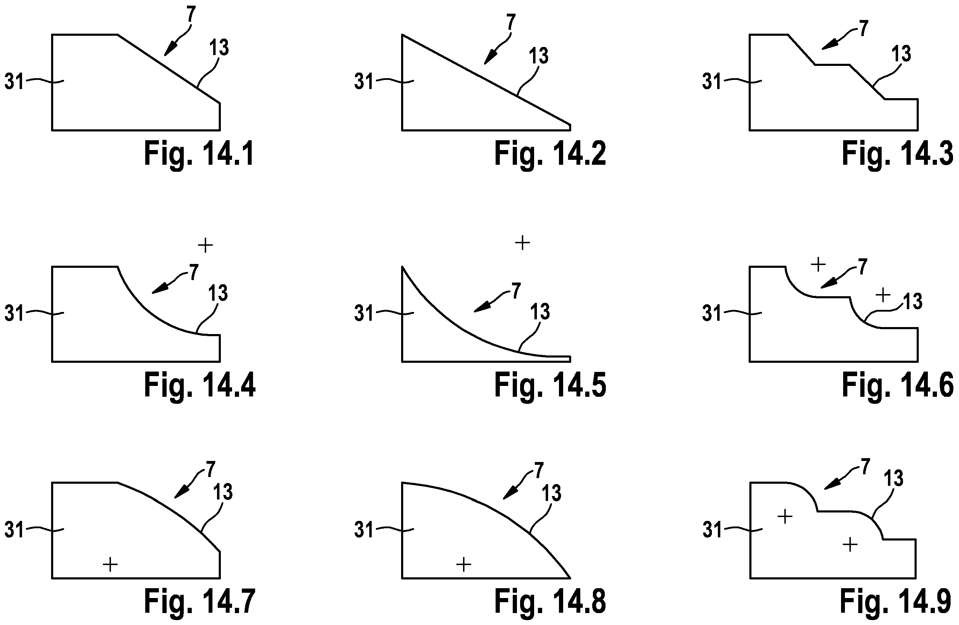

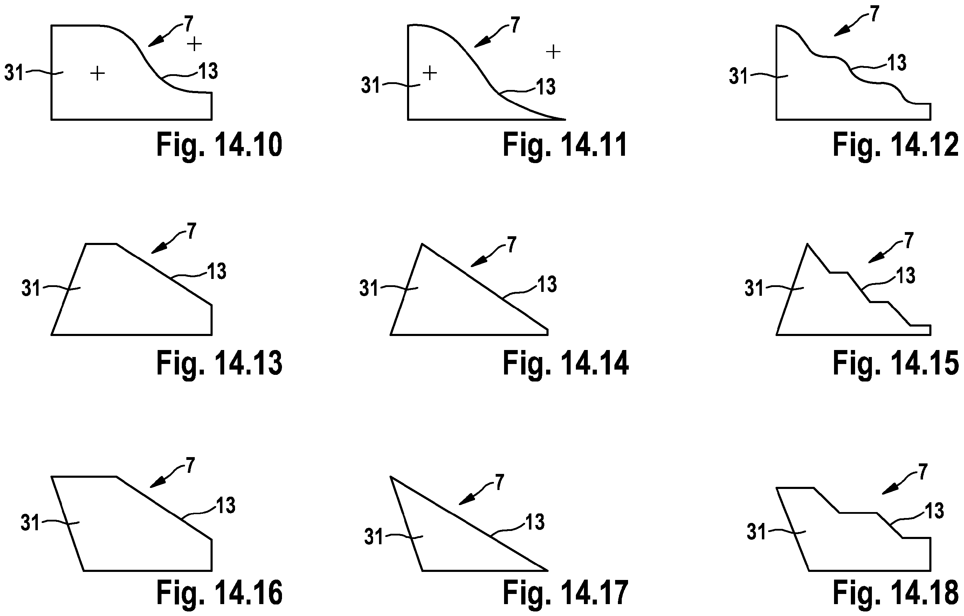

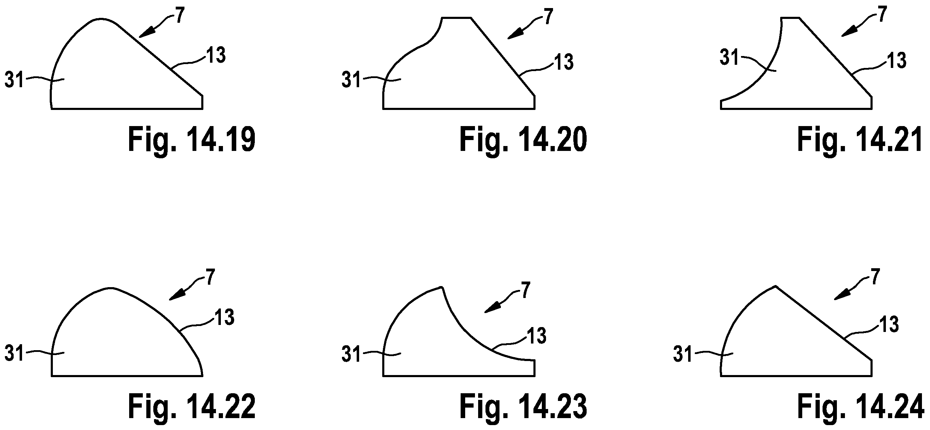

Mit Bezug auf die Figur 13 sind in den Figuren 14.1 bis 14.24 vierundzwanzig Ausführungsvarianten von Abweisern 7 in Seitenansicht auf eine linke Seitenfläche 31 dargestellt, wobei alle Ausführungsvarianten Anlaufflächen 13 zeigen, welche wenigstens einen stetig steigenden Abschnitt aufweisen.

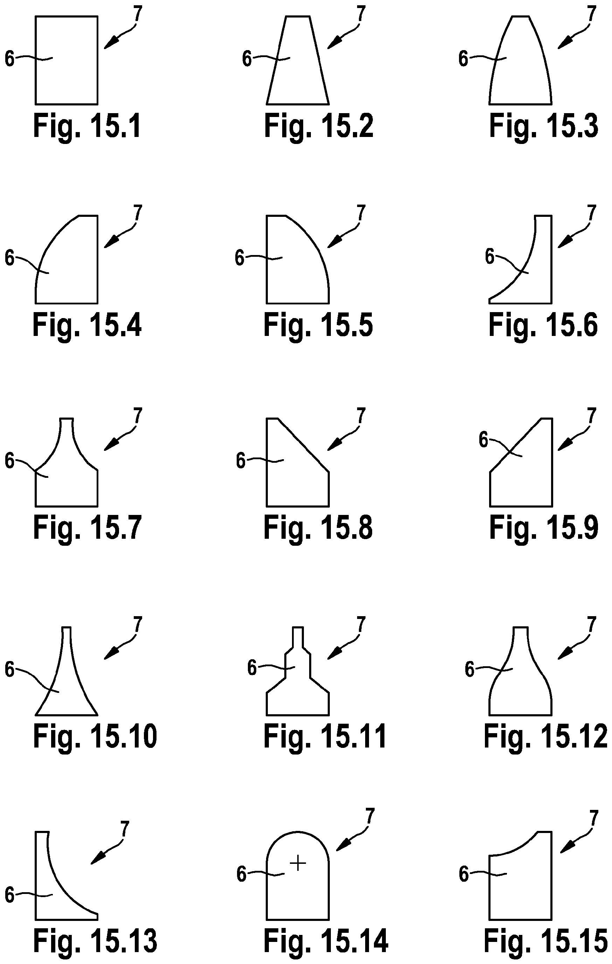

Mit Bezug auf die Figur 13 sind in den Figuren 15.1 bis 15.15 fünfzehn Ausführungsvarianten von Abweisern 7 in schematischer Ansicht auf eine Abstützfläche 6 gezeigt.

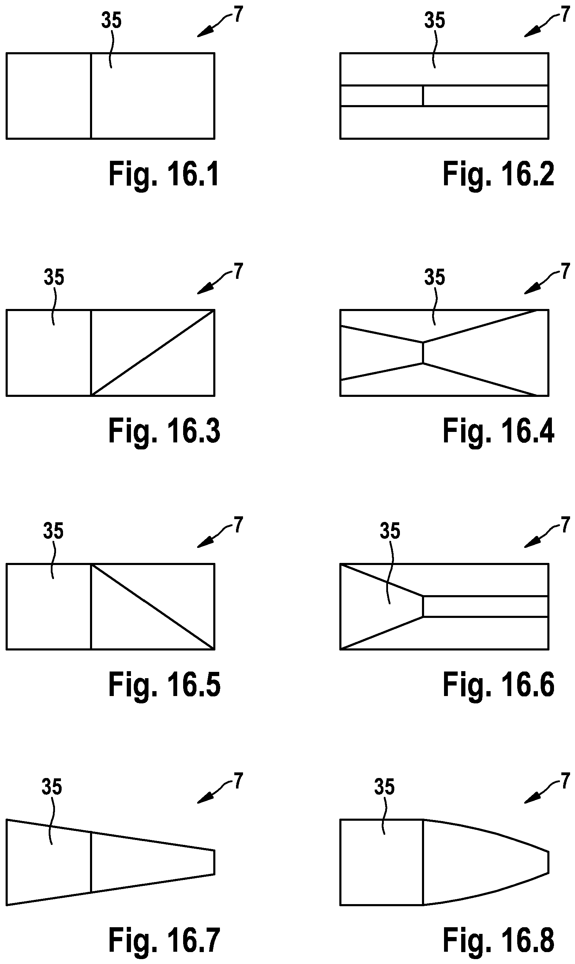

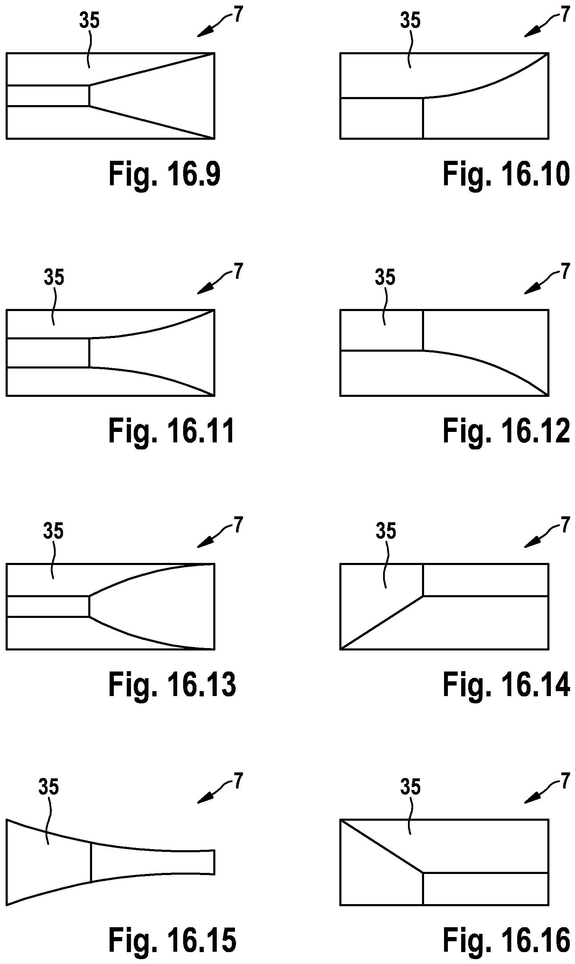

Mit Bezug auf die Figur 13 sind in den Figuren 16.1 bis 16.16 sechzehn Ausführungsvarianten von Abweisern 7 in schematischer Draufsicht auf die Kontaktfläche 35 gezeigt, wobei zur Orientierung jeweils die Drehrichtung w angegeben ist.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

## Patentansprüche

1. Bohrkrone (1), insbesondere Stahlbetonbohrkrone, für drehendes oder drehschlagendes Bohren von Stahlbeton oder anderen armierten Materialien, umfassend
- einen Einspannschaft (2), eine Bohrhülse (3) mit einem Bohrhülsenboden (4) und einem Bohrhülsenmantel (5) und wenigstens zwei Zähne (6,; 6a - 6d),
- wobei die Zähne (6; 6a - 6d) an einer freien, kreisringförmigen Stirnseite (11) des Bohrhülsenmantels (5) angeordnet sind,
- wobei jeder Zahn (6; 6a - 6d) in Vorschubrichtung (x) über die Stirnseite (11) des Bohrhülsenmantels (5) vorsteht,
- wobei die Zähne (6) als Hartmetallelemente mit einer Härte (H6) ausgebildet sind;
wobei an der Stirnseite (11) des Bohrhülsenmantels (5) jedem Zahn (6; 6a - 6d) in Drehrichtung (w) ein Abweiser (7; 7a - 7d) der Bohrkrone vorgelagert ist, um eine entgegen der Drehrichtung (w) ausgerichtete Frontfläche (F) des nachfolgenden Zahns (6; 6a - 6d) vor einer Kollision mit einer Armierungsstrebe (12) des Stahlbetons oder des anderen armierten Materials zu schützen,
**dadurch gekennzeichnet, dass**
der Abweiser (7) als ein Hartmetallaufsatz ausgebildet ist und eine Härte (H7) aufweist, die der Härte (H6) der Zähne (6) entspricht oder in einem Bereich zwischen 20% und 90%, insbesondere 30% und 70%, der Härte (H6) der Zähne (6) liegt.

2. Bohrkrone nach Anspruch 1, **dadurch gekennzeichnet, dass** der Zahn (6; 6a - 6d) in Richtung einer Längsachse (LB1) der Bohrkrone (1) gemessen gegenüber dem Abweiser (7; 7a - 7d) einen Überstand (S1) aufweist, welcher kleiner ist als ein Überstand (S2; 24), welchen der Zahn (6; 6a - 6d) gegenüber der Stirnseite (11) der Bohrkrone (1) aufweist.

3. Bohrkrone nach einem der vorhergehenden Ansprüche, **dadurch gekennzeichnet, dass** die Bohrkrone (1) einen Zentrierbohrer (8) umfasst, dessen Längsachse auf einer Längsachse (LB1) der Bohrkrone (1) liegt.

4. Bohrkrone nach einem der vorhergehenden Ansprüche, **dadurch gekennzeichnet, dass** eine auf einer Kreisbahn in einer radial zu der Vorschubrichtung (x) orientierten Ebene gemessener erster Abstand (Z1) zwischen dem Zahn (6; 6a - 6d) und dem vorgelagerten Abweiser (7; 7a - 7d) kleiner ist als ein in der radial zu der Vorschubrichtung orientierten Ebene gemessener zweiter Abstand (Z2) zwischen der dem Zahn (6; 6a - 6d) und dem nachgelagerten Abweiser (7; 7a - 7d).

5. Bohrkrone nach einem der vorhergehenden Ansprüche, **dadurch gekennzeichnet, dass** der dem jeweiligen Zahn (6; 6a - 6d) vorgelagerte jeweilige Abweiser (7; 7a - 7d) einen Abstand (Z1) zu dem Zahn (6; 6a - 6d) aufweist, wobei der Abstand (Z1) insbesondere kleiner ist als ein Durchmesser (D12) der in dem zu bohrenden Stahlbeton oder armierten Material angeordneten Armierungsstrebe (12).

6. Bohrkrone nach einem der vorhergehenden Ansprüche, **dadurch gekennzeichnet, dass** der Abweiser (7; 7a - 7d) eine Kontaktfläche (35) aufweist, wobei die Kontaktfläche (35) eine wenigstens Anlauffläche (13) und wenigstens eine Stirnfläche (14) umfasst oder wobei die Kontaktfläche (35) wenigstens eine Anlauffläche (13) umfasst.

7. Bohrkrone nach einem der vorhergehenden Ansprüche, **dadurch gekennzeichnet, dass** die Anlauffläche (13) des Abweisers (7; 7a - 7d) in Bezug auf eine radial zu der Vorschubrichtung orientierte Ebene in einer radial orientieren Seitenansicht mit wenigstens einem Abschnitt in einem Winkel von 10° bis 40° steht und/oder dass die Anlauffläche (13) in einer radial orientierten Seitenansicht mit wenigstens einem Abschnitt gewölbt ist.

8. Bohrkrone nach einem der vorhergehenden Ansprüche, **dadurch gekennzeichnet, dass** der dem jeweiligen Zahn (6; 6a - 6d) vorgelagerte jeweilige Abweiser (7; 7a - 7d) unterbrechungsfrei in den Zahn (6; 6a - 6d) übergeht, wobei ein Grundkörper des Zahns (6; 6a - 6d) und der Abweiser (7; 7a - 7d) insbesondere materialeinheitlich ausgebildet sind oder wobei der Abweiser (7; 7a - 7d) insbesondere an dem Zahn (6; 6a - 6d) anliegt.

9. Bohrkrone nach einem der vorhergehenden Ansprüche, **dadurch gekennzeichnet, dass** der Zahn (6; 6a - 6d) in Draufsicht entgegen einer axialen Vorschubrichtung (x) der Bohrkrone (1) als Trapez (21) ausgebildet ist, wobei eine Vorderkante (15) einer Spanfläche (16) eine Grundseite des Trapezes (21) bildet und wobei eine Hinterkante (17) einer Freifläche (18) des Zahns (6; 6a - 6d) eine zu dessen Grundseite parallel Seite des Trapezes (21) bildet, wobei eine Schneidkante (229 des Zahns (6; 6a - 6d) zwei Schenkel (19, 20) des Trapezes (21) verbindet und insbesondere parallel zu der Grundseite ausgerichtet ist.

10. Bohrkrone nach Anspruch 9, **dadurch gekennzeichnet, dass** die Vorderkante (15) eine Breite (23) aufweist, welche größer ist als eine Breite (28) des Abweisers (7; 7a - 7d), wobei der Zahn (6; 6a - 6d) radial nach innen und radial nach außen über den Abweiser (7; 7a - 7d) vorsteht.

11. Bohrkrone nach einem der Ansprüche 1 bis 10, **dadurch gekennzeichnet, dass**
- der Abweiser (7; 7a - 7d) eine Härte (H7) aufweist, welche einer Härte (H6) des Zahns (6; 6a - 6d) entspricht,
- wobei der Abweiser (7; 7a - 7d) und der Zahn (6; 6a - 6d) insbesondere aus dem gleichen Werkstoff hergestellt sind und insbesondere
- entweder aus einem Hartmetall, insbesondere einem Sinterhartmetall, mit einer Härte zwischen 1000 HV10 und 2000 HV10 und vorzugsweise einer Härte zwischen 1200 HV10 und 1600 HV10 hergestellt sind

12. Bohrkrone nach einem der Ansprüche 1 bis 10, **dadurch gekennzeichnet, dass** der Abweiser (7; 7a - 7d) eine Härte (H7) aufweist, wobei die Härte (H7) des Abweisers (7; 7a - 7d) geringer ist als eine Härte (H6) des Zahns (6; 6a - 6d) und wobei die Härte (H7) des Abweisers (7; 7a - 7d) zwischen 20% und 90% und insbesondere zwischen 30% und 70% der Härte (H6) des Zahns (6; 6a - 6d) beträgt.

13. Bohrkrone nach Anspruch 12, **dadurch gekennzeichnet,**
- **dass** der Abweiser (7; 7a - 7d) aus einem Hartmetall, insbesondere einem Sinterhartmetall hergestellt ist, wobei die Härte (H7) des Abweisers (7; 7a - 7d) über 1000 HV10 und vorzugsweise über 1200 HV10 liegt.

## Claims

1. Drill bit (1), in particular reinforced concrete drill bit, for the rotary or rotary percussive drilling of reinforced concrete or other reinforced materials, comprising
- a clamping shank (2), a drilling sleeve (3) with a drilling sleeve bottom (4) and a drilling sleeve shell (5) and at least two teeth (6; 6a-6d),
- wherein the teeth (6; 6a-6d) are arranged at a free end side (11), in the form of a circular ring, of the drilling sleeve shell (5),
- wherein each tooth (6; 6a-6d) protrudes beyond the end side (11) of the drilling shell sleeve (5) in the infeed direction (x),
- wherein the teeth (6) are configured as carbide elements having a hardness (H6),
- wherein, on the end side (11) of the drilling sleeve shell (5), a deflector (7; 7a-7d) of the drill bit is mounted upstream of each tooth (6; 6a-6d) in the direction of rotation (w), in order to protect a front face (F), oriented counter to the direction of rotation (w), of the following tooth (6; 6a-6d) from a collision with a reinforcement bar (12) of the reinforced concrete or of the other reinforced material,
**characterized in that**
the deflector (7) is configured as a carbide attachment and has a hardness (H7), which corresponds to the hardness (H6) of the teeth (6) or is in a range between 20% and 90%, in particular 30% and 70%, of the hardness (H6) of the teeth.

2. Drill bit according to Claim 1, **characterized in that** the tooth (6; 6a-6d) has an overhang (S1), measured in the direction of a longitudinal axis (LB1) of the drill bit (1), with respect to the deflector (7; 7a-7d), said overhang being smaller than an overhang (S2; 24) that the tooth (6; 6a-6d) has with respect to the end side (11) of the drill bit (1).

3. Drill bit according to either of the preceding claims, **characterized in that** the drill bit (1) comprises a centre drill (8), the longitudinal axis of which lies on a longitudinal axis (LB1) of the drill bit (1).

4. Drill bit according to one of the preceding claims, **characterized in that** a first distance (Z1), measured on a circular path in a plane oriented radially with respect to the infeed direction (x), between the tooth (6; 6a-6d) and the upstream deflector (7; 7a-7d) is smaller than a second distance (Z2), measured in the plane oriented radially with respect to the infeed direction, between the tooth (6; 6a-6d) and the downstream deflector (7; 7a-7d).

5. Drill bit according to one of the preceding claims, **characterized in that** the respective deflector (7; 7a-7d) upstream of the respective tooth (6; 6a-6d) has a distance (Z1) from the tooth (6; 6a-6d), wherein the distance (Z1) is in particular smaller than a diameter (D12) of the reinforcement bar (12) arranged in the reinforced concrete or reinforced material to be drilled.

6. Drill bit according to one of the preceding claims, **characterized in that** the deflector (7; 7a-7d) has a contact face (35), wherein the contact face (35) comprises at least one run-on face (13) and at least one end face (14), or wherein the contact face (35) comprises at least one run-on face (13).

7. Drill bit according to one of the preceding claims, **characterized in that** the run-on face (13) of the deflector (7; 7a-7d) has at least one portion at an angle of 10° to 40° with respect to a plane oriented radially with respect to the infeed direction in a radially oriented side view and/or **in that** the run-on face (13) has at least one curved portion in a radially oriented side view.

8. Drill bit according to one of the preceding claims, **characterized in that** the respective deflector (7; 7a-7d) upstream of the respective tooth (6; 6a-6d) transitions seamlessly into the tooth (6; 6a-6d), wherein a main body of the tooth (6; 6a-6d) and the deflector (7; 7a-7d) are formed in particular in a materially unitary manner, or wherein the deflector (7; 7a-7d) bears in particular against the tooth (6; 6a-6d).

9. Drill bit according to one of the preceding claims, **characterized in that** the tooth (6; 6a-6d) is formed as a trapezium (21) in plan view counter to an axial infeed direction (x) of the drill bit (1), wherein a front edge (15) of a rake face (16) forms a base side of the trapezium (21) and wherein a rear edge (17) of a flank (18) of the tooth (6; 6a-6d) forms a side of the trapezium (21) that is parallel to the base side thereof, wherein a cutting edge (22) of the tooth (6; 6a-6d) connects two legs (19, 20) of the trapezium (21) and is oriented in particular parallel to the base side.

10. Drill bit according to Claim 9, **characterized in that** the front edge (15) has a width (23) that is greater than a width (28) of the deflector (7; 7a-7d), wherein the tooth (6; 6a-6d) protrudes radially inwardly and radially outwardly beyond the deflector (7; 7a-7d).

11. Drill bit according to one of Claims 1 to 10, **characterized in that**
- the deflector (7; 7a-7d) has a hardness (H7) that corresponds to a hardness (H6) of the tooth (6; 6a-6d),
- wherein the deflector (7; 7a-7d) and the tooth (6; 6a-6d) are produced in particular from the same material, and in particular
- are produced either from a carbide, in particular a sintered carbide, having a hardness of between 1000 HV10 and 2000 HV10 and preferably a hardness of between 1200 HV10 and 1600 HV10.

12. Drill bit according to one of Claims 1 to 10, **characterized in that** the deflector (7; 7a-7d) has a hardness (H7), wherein the hardness (H7) of the deflector (7; 7a-7d) is less than a hardness (H6) of the tooth (6; 6a-6d), and wherein the hardness (H7) of the deflector (7; 7a-7d) is between 20% and 90%, and in particular between 30% and 70% of the hardness (H6) of the tooth (6; 6a-6d).

13. Drill bit according to Claim 12, **characterized**
- **in that** the deflector (7; 7a-7d) is produced from a carbide, in particular a sintered carbide, wherein the hardness (H7) of the deflector (7; 7a-7d) is above 1000 HV10 and preferably above 1200 HV10.

## Revendications

1. Scie-cloche (1), en particulier scie-cloche pour béton armé, pour le forage par rotation ou par rotation avec percussion de béton armé ou d'autres matériaux armés, comprenant:
- un arbre de serrage (2), une douille de forage (3) avec un fond de douille de forage (4) et une enveloppe de douille de forage (5) et au moins deux dents (6; 6a-6d),
- dans laquelle les dents (6; 6a - 6d) sont disposées sur un côté frontal annulaire circulaire libre (11) de l'enveloppe de douille de forage (5),
- dans laquelle chaque dent (6; 6a - 6d) est saillante dans la direction d'avance (x) sur le côté frontal (11) de l'enveloppe de douille de forage (5),
- dans laquelle les dents (6) sont réalisées sous forme d'éléments en métal dur avec une dureté (H6),
- dans laquelle un écarteur (7; 7a - 7d) de la scie-cloche est monté avant chaque dent (6; 6a - 6d) dans la direction de rotation (w) sur le côté frontal (11) de l'enveloppe de douille de forage (5) afin de protéger une face avant (F) de la dent suivante (6; 6a - 6d), dirigée contre la direction de rotation (w), contre une collision avec une barre d'armature (12) du béton armé ou de l'autre matériau armé,
**caractérisée en ce que** l'écarteur (7) est formé par une protubérance en métal dur et présente une dureté (H7), qui correspond à la dureté (H6) des dents (6) ou se situe dans une plage comprise entre 20 % et 90 %, en particulier entre 30 % et 70 %, de la dureté (H6) des dents (6).

2. Scie-cloche selon la revendication 1, **caractérisée en ce que** la dent (6; 6a - 6d) présente dans la direction d'un axe longitudinal (LB1) de la scie-cloche (1), mesuré par rapport à l'écarteur (7; 7a - 7d), un dépassement (S1) qui est plus petit qu'un dépassement (S2; S4) que la dent (6; 6a - 6d) présente par rapport au côté frontal (11) de la scie-cloche (1).

3. Scie-cloche selon l'une quelconque des revendications précédentes, **caractérisée en ce que** la scie-cloche (1) comprend un foret de centrage (8), dont l'axe longitudinal se situe sur l'axe longitudinal (LB1) de la scie-cloche (1).

4. Scie-cloche selon l'une quelconque des revendications précédentes, **caractérisée en ce qu'**une première distance (Z1) entre la dent (6; 6a - 6d) et l'écarteur antérieur (7; 7a - 7d), mesurée sur une circonférence dans un plan orienté radialement par rapport à la direction d'avance (x), est plus petite qu'une seconde distance (Z2) entre la dent (6; 6a - 6d) et l'écarteur postérieur (7; 7a - 7d), mesurée dans le plan orienté radialement par rapport à la direction d'avance.

5. Scie-cloche selon l'une quelconque des revendications précédentes, **caractérisée en ce que** l'écarteur respectif (7; 7a - 7d) placé avant la dent respective (6; 6a - 6d) présente une distance (Z1) de la dent (6; 6a - 6d), dans laquelle la distance (Z1) est en particulier plus petite qu'un diamètre (D12) de la barre d'armature (12) disposée dans le béton armé ou l'autre matériau armé à forer.

6. Scie-cloche selon l'une quelconque des revendications précédentes, **caractérisée en ce que** l'écarteur (7; 7a - 7d) présente une face de contact (35), dans laquelle la face de contact (35) comprend au moins une face d'accès (13) et au moins une face frontale (14) ou dans laquelle la face de contact (35) comprend au moins une face d'accès (13).

7. Scie-cloche selon l'une quelconque des revendications précédentes, **caractérisée en ce que** la face d'accès (13) de l'écarteur (7; 7a - 7d) se trouve avec au moins une partie, dans une vue latérale orientée radialement, avec un angle de 10° à 40° par rapport à un plan orienté radialement par rapport à la direction d'avance et/ou **en ce que** la face d'accès (13) est, dans une vue latérale orientée radialement, bombée dans au moins une partie.

8. Scie-cloche selon l'une quelconque des revendications précédentes, **caractérisée en ce que** l'écarteur respectif (7; 7a - 7d) placé avant la dent respective (6; 6a - 6d), se prolonge sans interruption dans la dent (6; 6a - 6d), dans laquelle un corps de base de la dent (6; 6a - 6d) et l'écarteur (7; 7a - 7d) sont en particulier formés en un matériau unitaire ou dans lequel l'écarteur (7; 7a - 7d) s'applique en particulier sur la dent (6; 6a - 6d).

9. Scie-cloche selon l'une quelconque des revendications précédentes, **caractérisée en ce que** la dent (6; 6a - 6d), vue en plan dans une direction opposée à une direction d'avance axiale (x) de la scie-cloche (1), est réalisée en forme de trapèze (21), dans laquelle une arête avant (15) d'une face de serrage (16) forme une grande base du trapèze (21) et dans laquelle une arête arrière (17) d'une face libre (18) de la dent (6; 6a - 6d) forme une petite base du trapèze (21) parallèle à sa grande base, dans laquelle une arête de coupe (229) de la dent (6; 6a - 6d) relie deux branches (19, 20) du trapèze (21) et est en particulier orientée parallèlement à la grande base.

10. Scie-cloche selon la revendication 9, **caractérisée en ce que** l'arête avant (15) présente une largeur (23), qui est plus grande qu'une largeur (28) de l'écarteur (7; 7a - 7d), dans laquelle la dent (6; 6a - 6d) est saillante radialement vers l'intérieur et radialement vers l'extérieur au-delà de l'écarteur (7; 7a - 7d).

11. Scie-cloche selon l'une quelconque des revendications 1 à 10, **caractérisée en ce que**
- l'écarteur (7: 7a - 7d) présente une dureté (H7), qui correspond à une dureté (H6) de la dent (6; 6a - 6d),
- dans laquelle l'écarteur (7; 7a - 7d) et la dent (6; 6a - 6d) sont en particulier fabriqués avec le même matériau et en particulier
- sont fabriqués soit en un métal dur, en particulier un métal dur fritté, avec une dureté comprise entre 1000 HV10 et 2000 HV10 et de préférence une dureté comprise entre 1200 HV10 et 1600 HV10.

12. Scie-cloche selon l'une quelconque des revendications 1 à 10, **caractérisée en ce que** l'écarteur (7; 7a - 7d) présente une dureté (H7), dans laquelle la dureté (H7) de l'écarteur (7; 7a - 7d) est inférieure à une dureté (H6) de la dent (6; 6a - 6d) et dans laquelle la dureté (H7) de l'écarteur (7; 7a - 7d) vaut entre 20 % et 90 % et en particulier entre 30 % et 70 % de la dureté (H6) de la dent (6; 6a - 6d).

13. Scie-cloche selon la revendication 12, **caractérisée en ce que** l'écarteur (7; 7a - 7d) est fabriqué en un métal dur, en particulier un métal dur fritté, dans laquelle la dureté (H7) de l'écarteur (7; 7a - 7d) se situe au-delà de 1000 HV10 et de préférence au-delà de 1200 HV10.
